Europäisches Patentamt

(19) European Patent Office

Office européen des brevets

(11) Veröffentlichungsnummer: **0 016 327 B1**

(12) # EUROPÄISCHE PATENTSCHRIFT

(45) Veröffentlichungstag der Patentschrift:
13.04.83

(21) Anmeldenummer: 80100565.3

(22) Anmeldetag: 04.02.80

(51) Int. Cl.³: **C 08 K 5/41, C 08 J 3/24, C 08 L 61/20**

(54) Latenter Härter für Aminoplastharze, Verfahren zu seiner Herstellung und die den Härter enthaltenden Aminoplastharze.

(30) Priorität: 22.03.79 DE 2911265

(43) Veröffentlichungstag der Anmeldung:
01.10.80 Patentblatt 80/20

(45) Bekanntmachung des Hinweises auf die Patenterteilung:
13.04.83 Patentblatt 83/15

(84) Benannte Vertragsstaaten:
AT BE DE FR IT NL SE

(56) Entgegenhaltungen:
GB-A-0 937 606
US-A-2 684 346

(73) Patentinhaber: CASSELLA Aktiengesellschaft, Hanauer Landstrasse 526, D-6000 Frankfurt am Main 61 (DE)

(72) Erfinder: Piesch, Steffen, Dr., An der Heide 32, D-6370 Oberursel (DE)
Erfinder: Dörries, Peter, Hansa-Allee 80, D-6000 Frankfurt am Main (DE)
Erfinder: Schmidt, Ewald, Dr., Sodener Strasse 4, D-6450 Hanau 6 (DE)
Erfinder: Hensel, Richard, Oderstrasse 16, D-6457 Maintal 1 (DE)

(74) Vertreter: Urbach, Hans-Georg, Dr. et al, Hanauer Landstrasse 526, D-6000 Frankfurt am Main 61 (DE)

### Latenter Härter für Aminoplastharze, Verfahren zu seiner Herstellung und die den Härter enthaltenden Aminoplastharze

Die vorliegende Erfindung betrifft einen latenten Härter für Aminoplastharze, bestehend aus oder enthaltend das Umsetzungsprodukt aus Diäthanolamin, Glycid und $SO_2$ im Molverhältnis von 1 : 1,0 bis 1,2 : 0,5 bis 1,0, seine Herstellung und seinen Einsatz bei der Herstellung hitzehärtbarer Aminoplastharze.

Aminoplastharze im Sinne der Erfindung sind mono- oder niedermolekulare Kondensationsprodukte einer Amino-, Imino- oder Amidgruppen enthaltenden Komponente, eines sogenannten Aminoplastbildners, mit einer Carbonylverbindung und gegebenenfalls einem niederen Alkanol (vergleiche Ullmanns Enzyklopädie der technischen Chemie, 4. Auflage, Band 7 (1974), S. 403 bis 424). Aminoplastbildner, die zur Herstellung von Aminoplastharzen in Betracht kommen sind: Melamin, Harnstoff, Dicyandiamid, Thioharnstoff, substituierte Melamine, Acetoguanamin, Butyroguanamin, Äthylenharnstoff.

Bevorzugte Aminoplastbildner zur Herstellung erfindungsgemäßer Aminoplastharze sind Melamin und Harnstoff.

Carbonylverbindungen, die für die Umsetzung mit obigen Aminoplastbildnern eingesetzt werden können, sind beispielsweise Formaldehyd, Acetaldehyd, Isobutyraldehyd, Aceton, Methyläthylketon und Diäthylketon. Bevorzugt wird für den erfindungsgemäßen Einsatz Formaldehyd. Die technisch wichtigsten Aminoplaste werden durch Kondensation der genannten bevorzugten Komponenten Formaldehyd, Harnstoff und/oder Melamin hergestellt. Aminoplastharze im Sinne der vorliegenden Erfindung sind auch solche, die durch Einkondensieren von modifizierenden Komponenten oder durch nachträglichen Zusatz von Modifizierungsmitteln erhalten werden. Bekannte Modifizierungsmittel sind beispielsweise o/p-Toluolsulfonamid, Amidosulfonsäure und ihre Salze, Caprolactam, Glucose, Sorbit, Glykol, Diglykol, Pentaerythrit, Saccharose, Methylenbisformamid, Methylenbisacetamid; Carbamate, wie z. B. Methylcarbamat, Methoxyäthylcarbamat, Salze der Malein- bzw. Fumaramidsäure.

Die Reaktion zwischen den Aminoplastbildnern und den Carbonylverbindungen wird nur so weit getrieben, daß die Produkte noch löslich und schmelzbar bleiben. Sobald dieser Zustand erreicht ist, wird die Kondensation abgebrochen, z. B. durch Abkühlen und Einstellen eines schwach alkalischen pH-Wertes der Reaktionsmischung. Die so hergestellten nicht auskondensierten Produkte (Aminoplastvorkondensate) werden in Form ihrer wäßrigen Lösungen, insbesondere als Tränkharze für die Schichtpreßstoff-Industrie und zur Oberflächenveredelung von Spanplatten sowie zur Herstellung von Preßmassen benutzt.

Mit Lösungen von Aminoplasttränkharzen werden Papiere oder Gewebe imprägniert, die zur Herstellung dekorativer Schichtpreßstoffplatten oder zur Beschichtung von Holzfaserplatten verwendet werden.

Zur Herstellung von Preßmassen wird das Aminoplastvorkondensat mit Füllstoffen, wie z. B. Cellulose oder Holzmehl, gemischt. Aus diesen Preßmassen werden durch Pressen in beheizten Formen Formteile aller Art, wie z. B. Gehäuse, Bedienungsknöpfe, elektrische Schalter und vieles andere hergestellt.

Bei der Verarbeitung von Aminoplasten erfolgt ein Übergang der löslichen und schmelzbaren Aminoplastvorkondensate in unschmelzbare und unlösliche Produkte. Bei diesem als Aushärtung bezeichneten Vorgang tritt eine durchgehende Vernetzung der Vorkondensate ein. Die Geschwindigkeit dieser Vernetzungsreaktion ist jedoch auch bei den erhöhten Verarbeitungstemperaturen für anwendungstechnische Prozesse zu gering und muß daher durch Zusätze von sogenannten Härtern beschleunigt werden. Als Härter werden sauer reagierende und/oder säureabspaltende Verbindungen verwendet. Bekannte Härter dieser Art sind Ammonium- oder Aminsalze, z. B. Ammoniumchlorid, Ammoniumrhodanid, Äthanolaminhydrochlorid oder starke organische Säuren, wie z. B. p-Toluolsulfonsäure. Diese bekannten Härter zeigen wesentliche Nachteile. So ergeben sich bei der Verwendung freier Säuren oder stark sauer reagierender Salze relativ geringe Topfzeiten, wodurch die Verarbeitung stark beeinträchtigt wird. Es sind daher zahlreiche Versuche unternommen worden, Härter zu finden, die ihre Wirksamkeit erst bei erhöhter Temperatur, wie sie bei der Verarbeitung der Aminoplaste angewandt wird, entfalten. Derartige Härter werden als latente Härter bezeichnet. Die bekannten, als Härter verwendeten Salze stark basischer Amine zeigen bereits eine gewisse Latenz, die jedoch noch wesentliche Wünsche der Praxis offen läßt.

Es ist auch bereits bekannt (vgl. GB-PS 506 004 und 506 003), Alkylester der Orthophosphorsäure als Härter für Harnstoff-Formaldehyl-Vorkondensate zu verwenden. Diese Härter sind jedoch ebenfalls nicht ausreichend latent und konnten sich in der Technik nicht behaupten.

Die genannten Nachteile der bekannten Härter machen sich in verschärfter Form bemerkbar, wenn die Aminoplastharze nach modernen Methoden, wie z. B. dem Kurztaktverfahren, verarbeitet werden sollen. Hierbei ist die Verwendung sehr starker Härter äußerst kritisch, wenn die Härtungszeiten der Presse möglichst kurz sein sollen, da Gefahr der Hitzeschleierbildung auf der Plattenunterseite durch langes Aufliegen auf dem heißen Preßblech sehr groß ist. Bei der Verwendung von schwächeren bekannten Härtern oder geringeren Mengen bekannter starker Härter wird die Preßzeit so lang, daß sie in einen unwirtschaftlichen Bereich hineinkommt.

Eine weitere erhebliche Gefahr bei der Verwendung starker Härter besteht in der Überhärtung der Aminoplastharze, die zu einer erheblichen Elastizitätsverminderung des ausgehärteten Produktes und zu Rißbildung führen kann. Es besteht daher ein dringender Bedarf nach hitzehärtbaren Aminoplastharzen, die bei einer ausreichenden Topfzeit auch bei kurzen Preßzeiten eine einwandfreie Härtung ergeben und die die Nachteile der mit bekannten Härtern versetzten Harze, wie z. B. Gefahr der Überhärtung, Hitzeschleierbildung oder Schädigung der Arbeitswerkzeuge nicht aufweisen.

Die vorliegende Erfindung betrifft nun einen neuen latenten Härter, der gegenüber bekannten Härtern wesentliche technische Vorteile aufweist.

Der erfindungsgemäße latente Härter besteht aus oder enthält das Umsetzungsprodukt aus Diäthanolamin, Glycid und $SO_2$ im Molverhältnis von 1 : 1,0 bis 1,2 : 0,5 bis 1,0, vorzugsweise von 1 : 1,0 bis 1,2 : 0,7 bis 0,85.

Er weist im Vergleich zu bekannten Härtern ein wesentlich günstigeres latentes Verhalten auf, d. h. der Härter spricht erst bei höheren Temperaturen an, dann allerdings sehr schnell, so daß keine Preßzeitverlängerungen notwendig sind, er zeigt eine höhere Beständigkeit gegen Hitzeschleierbildung.

Aminoplastharz-Tränkflotten, die den neuen erfindungsgemäßen Härter enthalten, weisen bei gleicher Reaktionsgeschwindigkeit unter Preßbedingungen eine wesentlich längere Topfzeit und damit günstigere Verarbeitungsvoraussetzungen und -Sicherheit auf als solche mit herkömmlichen Härtern.

Ein weiterer wesentlicher Vorteil des erfindungsgemäßen Härters ist der, daß er nicht zu Vergilbungen der beschichteten Oberflächen oder Schichtpreßstoffe führt.

Der erfindungsgemäße Härter kann allein aus dem Umsetzungsprodukt von Diäthanolamin, Glycid und $SO_2$ bestehen; er kann jedoch auch in Mischung mit einem harzverträglichen Lösungs- und Verdünnungsmittel vorzugsweise in Mischung mit Wasser vorliegen. Der Einsatz des unverdünnten Umsetzungsproduktes als Härter ist selbstverständlich möglich, wenn man dafür Sorge trägt, daß die hochviskose Substanz in dem Aminoplastharz durch gutes Rühren gleichmäßig verteilt und vollständig gelöst wird. Lösungen des Umsetzungsprodukts, insbesondere Lösungen in Wasser, die einen Wirkstoffgehalt von 50—80% haben, haben gegenüber der unverdünnten Substanz den Vorteil niedriger Viscosität und damit problemloser Dosierbarkeit und schneller homogener Verteilung im Aminoplastharz.

Die Herstellung des erfindungsgemäßen Härters erfolgt in der Weise, daß Diäthanolamin mit Glycid bei 0 bis 90°C im Molverhältnis 1 : 1,0 bis 1,2, ggf. in Gegenwart eines Verdünnungsmittels und das erhaltene Reaktionsprodukt anschließend bei 0 bis 90°C mit 0,5 bis 1,0 Mol $SO_2$ bezogen auf Diäthanolamin, ggf. in Gegenwart eines Verdünnungsmittels umgesetzt wird.

Vorzugsweise wird das Reaktionsprodukt von Diäthanolamin und Glycid mit 0,7 bis 0,85 Mol $SO_2$ bezogen auf Diäthanolamin umgesetzt und bei 10 bis 55°C gearbeitet. Die Umsetzung in Abwesenheit von Verdünnungsmitteln erfordert spezielle Apparaturen mit hochwirksamen, starken Mischsystemen und guter Wärmeableitung bzw. Kühlung zur Abführung der erheblichen Reaktionswärme.

Eine erhebliche Vereinfachung ergibt sich bei Durchführung der Umsetzungen in Gegenwart von Verdünnungsmitteln. Zweckmäßigerweise werden 10 bis 50 Gew.-% bezogen auf die Gesamtmasse des Ansatzes eines mit Aminoplastharzen verträglichen Verdünnungsmittels eingesetzt. Man kann in diesem Falle die erhaltenen Lösungen des fertigen Umsetzungsprodukts direkt den Aminoplastharzen zusetzen. Besonders vorteilhaft ist der Einsatz von Wasser als Verdünnungsmittel, welches gleichzeitig, in Form von Eis dem Ansatz zugefügt, zur Kühlung dienen kann.

Besonders vorteilhaft gestaltet sich die Herstellung des erfindungsgemäßen Härters, wenn man Diäthanolamin und Glycid in Gegenwart von 10 bis 50 Gew.-% Wasser bezogen auf Gesamtmasse der Reaktanten bei 0 bis 40°C vorzugsweise 10 bis 25°C umsetzt, wobei es günstig ist, Diäthanolamin vorzulegen und unter Rühren und Kühlen Glycid und Wasser bzw. Eis allmählich zuzufügen.

Nach erfolgter Umsetzung wird in das erhaltene wäßrige Reaktionsprodukt bei 0 bis 40°C vorzugsweise 10 bis 25°C, gegebenenfalls unter gleichzeitiger weiterer Zugabe von Wasser bzw. Eis unter Rühren und Kühlen die erforderliche Menge $SO_2$ eingeleitet.

Die gesamte verwendete Wassermenge wird so bemessen, daß sie 10 bis 50 Gew.-%, vorzugsweise 20 bis 30 Gew.-% der gesamten Reaktantenmasse beträgt.

Verfahrensmäßig sehr einfach und auch im Hinblick auf die Qualität der Produkte vorteilhaft ist es, anstelle der Zudosierung einer bestimmten gewogenen Menge $SO_2$ einfach so lange $SO_2$ einzuleiten, bis die Reaktionsmischung einen pH-Wert von 6,5 bis 7,5, vorzugsweise 7,1 bis 7,4 aufweist.

Die vorliegende Erfindung betrifft auch die hitzehärtbaren Aminoplastharze die als latenten Härter das Umsetzungsprodukt aus Diäthanolamin, Glycid und $SO_2$ im Molverhältnis von 1 : 1,0 bis 1,2 : 0,5 bis 1,0 vorzugsweise von 1 : 1,0 bis 1,2 : 0,7 bis 0,85 enthalten.

Der Gewichtsanteil des erfindungsgemäßen Härters in den erfindungsgemäßen hitzehärtbaren Aminoplastharzen beträgt 0,1 bis 5, vorzugsweise 0,5 bis 2 Gew.-%.

Die erfindungsgemäßen hitzehärtbaren Aminoplastharze werden hergestellt durch Kondensation eines oder mehrerer Aminoplastbildner, vorzugsweise von Melamin, Harnstoff oder deren Mischungen, gegebenenfalls Modifizierungsmitteln, wie beispielsweise o/p-Toluolsulfamid, Amido-

3

sulfonsäure oder deren Salze, Sorbit oder Caprolactam, der Carbonylverbindung, vorzugsweise Formaldehyd und gegebenenfalls einem niederen Alkanol, in an sich bekannter Weise (vgl. Ullmanns Enzyklopädie der technischen Chemie, 4. Auflage, Band 7, 1974, Seite 403 bis 424) bei Temperaturen zwischen 80 und 100°C, vorzugsweise zwischen 90 und 95°C, wobei die Reaktionsdauer so bemessen wird, daß die erhaltenen Vorkondensate eine Wasserverdünnbarkeit im Bereich von 1 : 4 bis 1 : 0,1, vorzugsweise 1 : 3 bis 1 : 1 aufweisen.

Dann werden dem Vorkondensat 0,1—5 Gew.-% vorzugsweise 0,5—2,0 Gew.-% des erfindungsgemäßen Härters zugesetzt, aus Gründen der einfacheren Handhabung zweckmäßigerweise in Form einer 50- bis 90-, vorzugsweise 70- bis 80%igen wäßrigen Lösung.

Die erfindungsgemäßen hitzehärtbaren Aminoplastharze sind wegen der guten Latenz des erfindungsgemäßen latenten Härters bei Raumtemperatur sehr gut beständig, so daß für die Verarbeitung ein ausreichender Zeitraum zur Verfügung steht. Bei der Verarbeitung der neuen erfindungsgemäßen Aminoplastharze bei den üblichen Preßtemperaturen wird bei verkürzter Preßzeit eine gute Aushärtung bei einwandfrei geschlossener Oberfläche erzielt. Beschädigungen der Verarbeitungswerkzeuge und der Preßbleche, Rißbildung durch Überhärtung, sowie Hitzeschleier treten nicht auf.

Die folgenden Ausführungsbeispiele veranschaulichen die vorliegende Erfindung, ohne sie zu beschränken.

## Beispiel 1

Eine Mischung von 4,04 kg Diäthanolamin und 500 g Wasser wird in einem Rundkolben durch Außenkühlung mit Eiswasser auf 5°C abgekühlt. Im Verlauf von 5 bis 6 Std. werden 2,82 kg Glycid zugetropft und während des Zutropfens 1 kg zerstoßenes Eis portionsweise zugefügt. Die Außenkühlung wird dabei so eingestellt, daß während der Glycidzugabe eine Temperatur von 5 bis 10°C herrscht.

Nach beendetem Glycidzusatz läßt man 5—6 Std. bei 10 bis 15° und anschließend 12 Std. bei Zimmertemperatur nachrühren. Der Ansatz wird dann durch Außenkühlung auf 10 bis 15°C heruntergekühlt und bei dieser Temperatur so lange $SO_2$ eingeleitet, bis der pH-Wert auf 7,2 abgesunken ist, wozu 2,036 kg $SO_2$ benötigt werden. Während des Einleitens wird zur Herabsetzung der Viskosität noch 2mal je 500 ml Wasser zugefügt.

Man erhält 11,4 kg einer erfindungsgemäßen Härterlösung mit einem Wirkstoffgehalt von 78 Gew.-%.

Zur Prüfung der Härterwirkung und der Latenz im Vergleich zu bekannten Härtern wurden Trübungsmessungen bei verschiedenen Temperaturen durchgeführt.

Hierzu wurden 4 Proben von je 100 g eines handelsüblichen 50%igen wäßrigen Melamin-Formaldehyd-Vorkondensats mit jeweils soviel des erfindungsgemäßen Härters A bzw. eines der bekannten Härter B, C und D versetzt, daß sich bei 100°C Trübungszeiten von 5 bis 6 Minuten ergaben.

Dann wurden die Messungen mit frischen Proben gleicher Zusammensetzung bei 90°C, 70°C und 60°C wiederholt.

Die Trübungszeit ist die Zeitspanne vom Einbringen der mit Härter versetzten klaren Harzprobe in ein auf die Meßtemperatur vorgeheiztes Bad bis zum Auftreten der ersten Trübung. Sie ist ein sehr brauchbares Maß für die Reaktivität des Harzes unter der Wirkung des Härters.

Diese Vergleichsversuche lieferten folgende Meßergebnisse (Trübungszeiten).

|                                   | 60°C  | 70°C | 90°C    | 100°C |
|-----------------------------------|-------|------|---------|-------|
| 0,8% Härter A (erfindungsgemäß)   | 74'   | 41'  | 8'30''  | 6'    |
| 0,5% Härter B                     | 36'   | 23   | 6'30''  | 5'45  |
| 0,25% Härter C                    | 60'   | 28   | 7'      | 5'30  |
| 0,5% Härter D                     | 55'   | 27   | 7'30''  | 5'    |

Normiert man diese Werte rechnerisch auf eine Trübungszeit bei 100°C von 6 Minuten, so ergeben sich bei 60°C für den Härter A 74, für B 37, für C 65 und für D 66 Minuten. Hieraus ergibt sich für den erfindungsgemäßen Härter gegenüber dem besten bekannten Härter bei 60°C eine um ca. 12% bessere Latenz. Lagerstabilitäts-Vergleiche von Proben der oben angegebenen Zusammensetzung bei 20°C ergeben bei Bewertung der ersten Trübung für den erfindungsgemäßen Härter 29 Std. für die bekannten Härter B, C und D je 18 Std. Hieraus ergibt sich, daß der erfindungsgemäße Härter bei 20°C

4

sogar eine um 61% bessere Latenz hat als die bekannten.

Der bei den in den Vergleichsversuchen eingesetzte bekannte Härter B basiert auf Morpholin-p-toluolsulfonat, Härter C auf Äthanolamin-hydrochlorid und Härter D auf p-Toluolsulfonsäure.

## Beispiel 2

In einem Rundkolben werden 500 g Diäthanolamin auf 50°C erwärmt und im Verlauf von 5 Std. bei einer von 50°C auf 78°C langsam ansteigenden Temperatur 360 g Glycid zugetropft. Anschließend läßt man das Reaktionsgemisch noch 1 Std. bei 86°C nachrühren.

In 314 g des so erhaltenen Produkts wird bei 50 bis 53°C so lange $SO_2$ eingeleitet, bis der pH-Wert einer auf ca. 50—80 Gew.-% eingestellten wäßrigen Lösung 7,1 beträgt. Man erhält 400 g einer hochviskosen, nahezu farblosen Flüssigkeit, die als solche oder als 50—80gew.-%ige wäßrige oder alkoholische Lösung als latenter Härter für Aminoplastharze eingesetzt werden kann.

In den folgenden Beispielen werden die Herstellung und Anwendung von erfindungsgemäßen Aminoplastharzen beschrieben. Der zur Prüfung des Aushärtungsgrades der Harzschichten herangezogene bekannte Kitontest wird wie folgt ausgeführt.

### a) Für Schichtpreßstoffe

Die Hälfte des zu prüfenden Materials wird 10 Minuten in eine kochende Lösung folgender Zusammensetzung eingebracht: 1 l Wasser, 5 ml konzentrierte Schwefelsäure, 1 ml einer 2%igen wäßrigen Lösung von Acid Red 45 (C. I.). Danach wird der Grad der Einfärbung mit einer sechsstufigen Skala verglichen, nach welcher Stufe 1 keine Färbung, Stufe 6 eine erhebliche Färbung anzeigt. Stufe 1 bedeutet eine einwandfreie Aushärtung, und die Stufe 6 ist einer ungenügenden Aushärtung zuzuordnen.

### b) Für beschichtete Spanplatten:

1 ml einer Lösung der folgenden Zusammensetzung: 20 ml konzentrierte Schwefelsäure, 20 ml einer 2%igen wäßrigen Lösung von Acid Red 45 (C. I.) wird auf die zu prüfende Oberfläche aufgebracht und mit einem Uhrglas bedeckt. Nach 2 Stunden wird der Grad der Anfärbung mit der obenerwähnten sechsstufigen Skala beurteilt.

Die in den Beispielen angegebenen Prozente sind Gewichtsprozente.

## Beispiel 3

94 kg 39%ige wäßrige Formaldehyd-Lösung, 77 kg Melamin, 4,5 kg amidosulfosaures Natrium, 40%ige wäßrige Lösung, 1,4 kg Methanol und 0,4 kg 2 n-Natronlauge wurden bei 90—95°C bis zu einer Wasserverdünnbarkeit von 1:2 kondensiert. Anschließend wurden der abgekühlten Lösung 35 l Wasser sowie 15 kg Methylenbisformamid (roh) in Form einer 50%igen wäßrigen Lösung und 1,2% des erfindungsgemäßen, im Beispiel 1 hergestellten latenten Härters auf Festharz berechnet, zugesetzt. In dieser Lösung wurde ein 110 g/m² schweres Dekorpapier auf einen Harzanteil von ca. 58% imprägniert und anschließend auf eine Restfeuchte von 5—6% (bestimmt durch Wiegen einer Probe vor und nach einer 5-Minuten-Trocknung bei 160°C) getrocknet.

Das Aufpressen des Papiers auf eine ca. 700 kg/m³ schwere Holzspanplatte erfolgte in einer Einetagenpresse unter folgenden Bedingungen:

Auflagezeit bis zum Erreichen des vollen Preßdruckes ca. 5 Sekunden, Preßzeit: 38 Sekunden, Preßtemperatur: Unterseite 145°C, Oberseite 148°C (Objekttemperatur), Preßdruck 19,6 bar (20 kp/cm²).

Nach dem Heißenformen wurden auf der Plattenunterseite keine Überhärtungslinien (Hitzeschleier) festgestellt. Die hergestellte beschichtete Holzspanplatte zeigte eine einwandfreie geschlossene Oberfläche. Die Aushärtung entsprach der Stufe 2 der sechsstufigen Kitonskala. Die Prüfung der Rißbeständigkeit n. DIN 53 799 — 4.7.3., ergab nach 20 Stunden Lagerung bei 70°C im Wärmeschrank mit Luftumwälzung Rißanfälligkeit — Stufe 0 (Dekorfläche ohne Haarrisse).

## Beispiel 3a (Vergleichsbeispiel)

Einer Melaminharzlösung, hergestellt gemäß Beispiel 1a, werden an Stelle des erfindungsgemäßen im Beispiel 1 hergestellten latenten Härters, 1,2% auf Festharz berechnet, einer 20%igen wäßrigen Ammoniumchloridlösung zugesetzt und unter den gleichen Bedingungen zu einer beschichteten Holzspanplatte verarbeitet. Nach dem Entformen wird auf der Plattenunterseite eine stark mit Hitzeschleiern beeinträchtigte Oberfläche erhalten. Die Aushärtung entspricht der Stufe 2 der sechsstufigen Kitonskala. Die Oberflächen beider Seiten sind geschlossen, jedoch werden nach der Temperung 20 Std. bei 70° C Risse beobachtet.

### Beispiel 4

94 kg 39%ige wäßrige Formaldehyd-Lösung, 77 kg Melamin, 4,5 kg amidosulfosaures Natrium 40%ige wäßrige Lösung, 1,4 kg Methanol, 0,41 kg 2 n-Natronlauge wurden bei 90—95° C bis zu einer Wasserverdünnbarkeit von 1 : 2 kondensiert. Anschließend wurden der abgekühlten Harzlösung 35 l Wasser, sowie 15 kg Methylenbisformamid (roh) in Form einer 50%igen wäßrigen Lösung und 0,6% des erfindungsgemäßen in Beispiel 1 hergestellten latenten Härters, auf Festharz bezogen, zugesetzt.

In dieser Lösung erfolgt die Imprägnierung eines ca. 110 g/m² schweren bedruckten (Leinenmuster) Dekorpapiers. Der Harzanteil betrug ca. 56,5% (bezogen auf Papierendgewicht), der Restfeuchtegehalt (5 min/160° C) 5,6—5,9%. Das Verpressen der Papiere erfolgte auf einer Holzspanplatte mit einer mittleren Rohdichte von 720 kg/m³ bei einer Objekttemperatur von 135° C, einer Heizzeit von 3 min und einer Kühlzeit von 4—5 min, je nach Kühlwassertemperatur sowie einem Preßdruck von 19,6 bar (20 kp/cm²).

### Preßaufbau

Heizplatte; Asbestpolster, ca. 1200 g/cm²; Preßblech hochglanzverchromt; Dekorpapier, wie beschrieben; Holzspanplatte, Rohdichte 720 kg/m³; Preßblech wie oben; Asbestpolster ca. 1200 g/cm²; Transportblech; Heizplatte.

Nach dem Entformen bei ca. 85—95° C wird eine beschichtete Holzspanplatte erhalten, die eine einwandfreie geschlossene Oberfläche bei einem Kitontest der Stufe 2 entsprechend aufweist. Nach der Temperung, die 20 Std. bei 70° C durchgeführt wird, konnte keine Rißbildung beobachtet werden.

### Beispiel 5

100 kg Melamin, 152,5 kg 39%ige wäßrige Formaldehyd-Lösung, 20 kg Methanol, 5 kg Sorbit, 2 kg Caprolactam, 2 kg 2 n-Natronlauge werden bei pH 8,5—9,5 und 90—95° C unter ständiger Kontrolle des pH-Wertes auf eine Wasserverdünnbarkeit von 1 : 2,0 kondensiert. Nach dem Abkühlen werden der Lösung 25 l Wasser und 0,6% des erfindungsgemäßen im Beispiel 1 hergestellten latenten Härters zugesetzt. In dieser Harzlösung erfolgt die Imprägnierung eines ca. 30 g/m² schweren Overlaypapiers und eines ca. 110 g/m² schweren bedruckten Dekorpapiers. Die Beharzung wurde wie folgt eingestellt:

Overlaypapier, Harzanteil: 70%, Restfeuchtegehalt: 7%, Dekorpapier, Harzanteil: 45%, Restfeuchtegehalt: 5,5%. Die imprägnierten Papiere wurden zusammen mit in Phenolharz imprägnierten Kraftpapieren in einer Mehretagenpresse verpreßt.

### Preßaufbau:

1 Heizplatte; Kraftpapierpolster 100 g/m²; 1 Preßblech; 1 Overlaypapier, imprägniert; 1 Dekorpapier, imprägniert; 5 in Phenolharz imprägnierte Kraftpapiere, Harzanteil: 35—37%, 5% Restfeuchtegehalt; 1 phenolharzimprägniertes Kraftpapier, Harzanteil: 37%, 7% Restfeuchtegehalt; 2 Trennpapiere, 1 Phenolharzpapier, wie beschrieben; 5 Phenolharzpapiere, wie beschrieben; 1 Dekorpapier; 1 Overlaypapier; 1 Preßblech; Papierpolster aus Kraftpapier, 1200 g/m²; 1 Transportblech; 1 Heizplatte.

Die Preßzeit betrug 6 min, die Kühlzeit 4—5 min, Preßtemperatur (Objekt) 140° C, der Preßdruck 18,4 bar (80 kp/cm²). Nach dem Entformen wird eine einwandfrei geschlossene Oberfläche erhalten. Der Kitontest entspricht der Stufe 2. Nach der Temperung des Schichtstoffes bei 80° C über 20 Std. gemäß DIN 16 926, Ausgabe Mai 1975 bzw. DIN 53 799 4.7.1., Ausgabe Mai 1975, wird keine Rißbildung festgestellt.

### Beispiel 5a (Vergleichsbeispiel)

Anstelle des in Beispiel 5 eingesetzten Härters werden der gemäß Beispiel 5 hergestellten Harz-Lösung 3450 ml einer 50%igen wäßrigen Lösung von Diäthanolaminacetat zugesetzt und wie in Beispiel 5 verarbeitet. Es wird ein Schichtstoff erhalten, der der Aushärtung nur der Stufe 4 entspricht.

### Beispiel 5b (Vergleichsbeispiel)

Anstelle des in Beispiel 5a eingesetzten Härters werden der gemäß Beispiel 5 hergestellten Harzlösung 173 ml einer 50%igen wäßrigen Lösung von Äthanolaminhydrochlorid zugesetzt und wie in Beispiel 5 weiterverarbeitet. Der hergestellte Schichtstoff zeigt eine geschlossene Oberfläche, eine Aushärtung von 2, jedoch nach der Temperung, die 20 Std. bei 80°C durchgeführt wurde, deutliche Rißbildung.

## Patentansprüche

1. Latenter Härter für Aminoplastharze, bestehend aus oder enthaltend das Umsetzungsprodukt aus Diäthanolamin, Glycid und $SO_2$ im Molverhältnis von 1 : (1,0 bis 1,2) : (0,5 bis 1,0).

2. Latenter Härter gemäß Anspruch 1, dadurch gekennzeichnet, daß das Molverhältnis des Umsetzungsproduktes 1 : (1,0 bis 1,2) : (0,7 bis 0,85) ist.

3. Verfahren zur Herstellung eines latenten Härters für Aminoplastharze, dadurch gekennzeichnet, daß Diäthanolamin mit Glycid bei 0 bis 90°C im Molverhältnis 1 : (1,0 bis 1,2), ggf. in Gegenwart eines Verdünnungsmittels, und das erhaltene Reaktionsprodukt anschließend bei 0 bis 90°C mit 0,5 bis 1,0 Mol $SO_2$, bezogen auf Diäthanolamin, ggf. in Gegenwart eines Verdünnungsmittels, umgesetzt wird.

4. Verfahren gemäß Anspruch 3, dadurch gekennzeichnet, daß mit 0,7 bis 0,85 Mol $SO_2$ umgesetzt wird.

5. Verfahren gemäß den Ansprüchen 3 und 4, dadurch gekennzeichnet, daß die Umsetzung mit $SO_2$ bei einer Temperatur von 10 bis 55°C durchgeführt wird.

6. Verfahren gemäß den Ansprüchen 3 bis 5, dadurch gekennzeichnet, daß die Umsetzung in Gegenwart von 10—50 Gew.-% Wasser als Verdünnungsmittel durchgeführt wird.

7. Hitzehärtbares Aminoplastharz, bestehend aus Aminoplast-Vorkondensaten, ggf. Modifizierungsmitteln und einen latenten Härter, dadurch gekennzeichnet, daß es als latenten Härter das Umsetzungsprodukt aus Diäthanolamin, Glycid und $SO_2$ im Molverhältnis von 1 : (1,0 bis 1,2) : (0,5 bis 1,0) enthält.

8. Hitzehärtbares Aminoplastharz gemäß Anspruch 7, dadurch gekennzeichnet, daß es als latenten Härter das Umsetzungsprodukt aus Diäthanolamin, Glycid und $SO_2$ im Molverhältnis von 1 : (1,0 bis 1,2) : (0,7 bis 0,85) enthält.

9. Hitzehärtbares Aminoplastharz gemäß den Ansprüchen 7 und 8, dadurch gekennzeichnet, daß es das Umsetzungsprodukt aus Diäthanolamin. Glycid und $SO_2$ in einer Menge von 0,1 bis 5 Gew.-%, bezogen auf Festsubstanz, enthält.

10. Hitzehärtbares Aminoplastharz gemäß den Ansprüchen 7 bis 9, dadurch gekennzeichnet, daß es das Umsetzungsprodukt in einer Menge von 0,5 bis 2 Gew.-%, bezogen auf Festsubstanz, enthält.

## Claims

1. Latent curing agent for aminoplast resins, consisting of or containing the reaction product formed from diethanolamine, glycidol and $SO_2$ in a molar ratio of 1 : (1.0 to 1.2) : (0.5 to 1.0).

2. Latent curing agent according to claim 1, characterised in that the molar ratio of the reaction product is 1 : (1.0 to 1.2) : (0.7 to 0.85).

3. Process for the manufacture of a latent curing agent for aminoplast resins, characterised in that diethanolamine is reacted with glycidol at 0 to 90°C in a molar ratio of 1 : (1.0 to 1.2), if appropriate in the presence of a diluent, and the resulting reaction product is then reacted at 0 to 90° with 0.5 to 1.0 mol of $SO_2$, relative to diethanolamine, if appropriate in the presence of a diluent.

4. Process according to claim 3, characterised in that the reaction is carried out using 0.7 to 0.85 mol of $SO_2$.

5. Process according to claims 3 and 4, characterised in that the reaction with $SO_2$ is carried out at a temperature from 10 to 55°C.

6. Process according to claims 3 to 5, characterised in that the reaction is carried out in the presence of 10—50% by weight of water as a diluent.

7. Thermosetting aminoplast resin, consisting of aminoplast precondensates, optionally modifying agents, and a latent curing agent, characterised in that it contains, as the latent curing agent, the reaction product formed from diethanolamine, glycidol and $SO_2$ in a molar ratio of 1 : (1.0 to 1.2) : (0.5 to 1.0).

8. Thermosetting aminoplast resin according to claim 7, characterised in that it contains, as the latent curing agent, the reaction product formed from diethanolamine, glycidol and $SO_2$ in the molar ratio of 1 : (1.0 to 1.2) : (0.7 to 0.85).

9. Thermosetting aminoplast resin according to claims 7 and 8, characterised in that it contains the reaction product formed from diethanolamine, glycidol and $SO_2$ in a quantity of 0.1 to 5% by weight, relative to the solids content.

10. Thermosetting aminoplast resin according to claims 7 and 9, characterised in that it contains the reaction product in a quantity of 0.5 to 2% by weight, relative to the solids content.

**Revendications**

1. Durcisseur latent pour résines aminoplastes, durcisseur qui est constitué, partiellement ou totalement, du produit résultant de la réaction de la diéthanolamine, du glycidol et de $SO_2$ dans les proportions molaires 1 : (1,0 à 1,2) : (0,5 à 1,0).

2. Durcisseur latent selon la revendication 1, caractérisé en ce que les proportions molaires du produit réactionnel sont de 1 : (1,0 à 1,2) : (0,7 à 0,85).

3. Procédé de préparation d'un durcisseur latent pour résines aminoplastes, procédé caractérisé en ce qu'on fait réagir la diéthanolamine avec le glycidol à une température de 0 à 90°C, dans un rapport molaire de 1 : (1,0 à 1,2), éventuellement en présence d'un diluant, et on fait ensuite réagir le produit réactionnel obtenu, à une température de 0 à 90°C, avec de 0,05 à 1,0 mole de $SO_2$, par rapport à la diéthanolamine, éventuellement en présence d'un diluant.

4. Procédé selon la revendication 3, caractérisé en ce qu'on fait réagir avec de 0,7 à 0,85 mole de $SO_2$.

5. Procédé selon l'une des revendications 3 et 4, caractérisé en ce qu'on effectue la réaction avec $SO_2$ à une température de 10 à 55°C.

6. Procédé selon l'une quelconque des revendications 3 à 5, caractérisé en ce qu'on effectue la réaction en présence de 10 à 50% en poids d'eau comme diluant.

7. Résine aminoplaste thermodurcissable, constituée de précondensats d'aminoplastes, éventuellement d'agents modificateurs et d'un durcisseur latent, resine caractérisée en ce qu'elle contient, comme durcisseur latent, le produit résultant de la réaction de la diéthanolamine, du glycidol et de $SO_2$ dans les proportions molaires 1 : (1,0 à 1,2) : (0,5 à 1,0).

8. Résine aminoplaste thermodurcissable selon la revendication 7, caractérisée en ce qu'elle contient, comme durcisseur latent, le produit résultant de la réaction de la diéthanol-amine, du glycidol et de $SO_2$ dans les proportions molaires 1 : (1,0 à 1,2) : (0,7 à 0,85).

9. Résine aminoplaste thermodurcissable selon l'une des revendications 7 et 8, caractérisée en ce qu'elle contient le produit résultant de la réaction de la diéthanolamine, du glycidol et de $SO_2$ en une quantité de 0,1 à 5% en poids par rapport à la substance solide.

10. Résine aminoplaste thermodurcissable selon l'une quelconque des revendications 7 à 9, caractérisée en ce qu'elle contient le produit de réaction en une quantité de 0,5 à 2% en poids par rapport à la substance solide.